# FASCICULE DE BREVET EUROPEEN

(11) **EP 3 678 850 B1**
(45) Date de publication et mention de la délivrance du brevet: **29.11.2023**
(21) Numéro de dépôt: 18762344.2
(22) Date de dépôt: 14.08.2018
(51) Int. Cl.: B29C 70/24

(54) **PROCÉDÉ DE RÉALISATION D'UNE PIÈCE EN MATÉRIAU COMPOSITE PAR AIGUILLETAGE ORIENTÉ D'UNE PRÉFORME**
VERFAHREN ZUR HERSTELLUNG EINES VERBUNDWERKSTOFFTEILS DURCH ORIENTIERTES VERNADELN EINER VORFORM
METHOD FOR PRODUCING A COMPOSITE MATERIAL PART BY THE ORIENTED NEEDLING OF A PREFORM

(30) Priorité: 04.09.2017 FR 1770898
(43) Date de publication de la demande: 15.07.2020
(73) Titulaire: Coriolis Group, 56530 Quéven (FR)
(72) Inventeur: HAMLYN, Alexander, 56270 Ploemeur (FR); JOB, Sophie, 56690 Nostang (FR)
(86) Numéro de dépôt international: PCT/FR2018/000205
(87) Numéro de publication internationale: WO 2019/043302

(56) Documents cités:
- EP-A1- 0 611 741
- WO-A1-2006/069581
- WO-A2-2004/041528
- US-A- 5 876 540

## Description

La présente invention concerne un procédé de réalisation de pièces en matériau composite à matrice organique, appelée également matériau composite à matrice polymère, comprenant des fibres continues unidirectionnelles et une matrice polymère.

Il est connu des procédés de réalisation de pièces en matériau composite à matrice polymère, comprenant une étape de réalisation d'une préforme sèche initiale, et une étape d'imprégnation de la préforme sèche avec un polymère d'imprégnation, par exemple par injection et/ou infusion, pour former une pièce en matériau composite.

Les préformes sèches sont classiquement réalisées manuellement à partir de tissus formés par tissage de fibres sèches continues unidirectionnelles, ou à partir de tissus multiaxiaux ou tissus NCF (Non Crimp Fabric) comprenant plusieurs plis superposés de fibres unidirectionnelles continues maintenus ensemble par couture. Ces préformes présentent un coût de fabrication élevé, et les taux de chute lors de la réalisation de pièces à partir de tels tissus préfabriqués s'avèrent importants.

Afin d'automatiser les opérations et limiter le taux de chute, il a été proposé de réaliser des préformes sèches par drapage automatique de fibres unidirectionnelles continues, les préformes résultantes comprenant plusieurs plis superposés de fibres unidirectionnelles continues. Les fibres peuvent par exemple être appliquées au contact, au moyen d'un rouleau, par un procédé de placement de fibres, chaque pli étant formé par drapage sur un moule d'une ou plusieurs bandes jointives, chacune formée d'une ou plusieurs fibres plates, de type ruban, telles que des fibres de carbone constituées d'une multitude de fils ou filaments de carbone. Les préformes sèches comprennent une faible quantité de liant, généralement inférieure à 5 %, permettant de maintenir la cohésion de la préforme. Toutefois, ce type de préforme obtenue par drapage de plis superposés peut présenter une perméabilité et une cohésion entre fibres insuffisantes pour permettre une imprégnation rapide et satisfaisante, notamment dans le cas d'une imprégnation par injection RTM (Resin Transfert Molding) à haute pression et haute température.

Par ailleurs, il a été proposé dans la demande de brevet FR16/70556, déposée par la Demanderesse le 27 septembre 2016, un procédé de réalisation de pièces en matériau composite comprenant une étape d'application de filaments non tissés sur une première face principale de la préforme sèche et une étape d'aiguilletage desdits filaments au moyen d'un dispositif d'aiguilletage comprenant une pluralité d'aiguilles, chacune munie d'au moins une encoche, de sorte que des filaments soient entraînés par les aiguilles et disposés dans une direction sensiblement perpendiculaire aux fibres continues de la préforme sèche. Ce procédé permet de proposer de nouvelles préformes sèches présentant une excellente cohésion pour leur traitement ultérieur, et une excellente perméabilité. Un procédé similaire comprenant l'aiguilletage de préformes munies du ou des polymères constituant la matrice polymère de la pièce finale a également été proposé dans la demande de brevet FR17/70331, déposée par la Demanderesse le 3 avril 2017.

Suivant le type de fibres utilisées, quelques ruptures de fibres peuvent toutefois apparaître lors de l'aiguilletage, détériorant la préforme et réduisant les propriétés mécaniques de la pièce résultante, et générant en outre des fibrilles nocives pour les opérateurs et les équipements. Pour réduire les ruptures de fibres, il a été proposé dans la demande de brevet FR17/70332, déposée par la Demanderesse le 03 avril 2017, de réaliser l'étape d'aiguilletage en présence d'un agent lubrifiant.

Le document brevet WO2004/041528 décrit un procédé de réalisation de pièces en matériau composite selon le préambule de la revendication 1.

Le but de la présente invention est de proposer une solution alternative et/ou complémentaire visant à réduire, voire supprimer, la rupture de fibres lors de l'aiguilletage.

A cet effet, la présente invention a pour objet un procédé de réalisation d'une pièce en matériau composite conformément à la revendication 1.

Les aiguilles sont entraînées dans un mouvement de va-et-vient par un système d'entrainement du dispositif d'aiguilletage, pour traverser la préforme, de préférence de part en part. Lors du mouvement des aiguilles en direction de la préforme, au moins une partie de ces filaments se positionnent dans les encoches des aiguilles et sont entraînés par les aiguilles à travers la préforme. Ces filaments aiguilletés positionnés dans la direction Z, dans l'épaisseur de la préforme, stabilisent la préforme et permettent d'augmenter la cohésion de la préforme pour la ou les étapes ultérieures de traitement de la préforme, notamment d'éviter un délaminage ou un déplacement non souhaité de fibres de la préforme lors d'une étape d'imprégnation ou une étape de formage ultérieure.

Lors de l'aiguilletage, les encoches des aiguilles sont remplies par les filaments et les axes d'encoche forment avec la ou les orientations de fibre des plis un angle non nul. Selon l'invention, on effectue un aiguilletage orienté de la préforme, en définissant l'orientation des aiguilles par rapport aux orientations de fibre de la préforme, de sorte que les fibres continues ne sont pas ou peu entraînées ou endommagées par les aiguilles, réduisant ainsi les risques de détérioration de la préforme et garantissant des propriétés mécaniques optimales de la pièce finale obtenue avec la préforme.

Un important taux de transfert de filament peut ainsi être obtenu avec une densité d'aiguilletage réduite, ce qui permet de réduire le temps de réalisation de l'étape d'aiguilletage et ainsi d'augmenter la cadence de production des préformes aiguilletées.

Les fibres continues, de préférence appliquées par placement de fibres, sont de préférence des fibres continues unidirectionnelles, par exemple des fibres de carbone, des fibres de verre, des fibres synthétiques telles que des fibres d'aramide, des fibres de polyéthylène, et/ou des fibres naturelles, telles que par exemple des fibres de lin.

Le procédé selon l'invention peut notamment être utilisé pour des préformes sèches telles que décrites dans la demande de brevet FR16/70556 précitée, le procédé comprenant alors une étape d'imprégnation de la préforme après aiguilletage, et/ou pour des préformes munies du ou des polymères constituant la matrice finale de la pièce tel que décrit dans la demande de brevet FR17/70331 précitée.

Le procédé selon l'invention peut avantageusement être utilisé pour la réalisation de pièces en matériau composite, notamment dans le domaine de l'automobile ou l'aéronautique.

La préforme peut avoir une seule orientation de fibre, les axes d'encoche étant alors de préférence disposés perpendiculairement à ladite orientation de fibre, à plus ou moins 10°, de préférence à plus ou moins 5°, mieux encore à plus ou moins 2,5°près.

Selon un mode de réalisation, la préforme est formée de plusieurs plis superposés, chaque pli étant formé de fibres continues unidirectionnelles orientées selon une orientation de fibre, ladite préforme comprenant des plis ayant au moins deux orientations de fibre différentes, lesdites aiguilles et la préforme étant disposées de sorte que les axes d'encoche forment avec chacune des deux orientations de fibre un angle non nul lors de l'aiguilletage.

Selon un mode de réalisation, ladite préforme comprend des plis d'orientations de fibre différentes, les axes d'encoche forment avec chaque orientation de fibre un angle non nul lors de l'aiguilletage.

Selon un mode de réalisation, les axes d'encoche sont disposés selon une bissectrice entre deux orientations de fibre adjacentes à plus ou moins 10°, de préférence à plus ou moins 5°, mieux encore à plus ou moins 2,5°, deux orientations de fibre étant adjacentes lorsque ladite préforme ne comprend pas de troisième orientation de fibre disposée entre les deux dites orientations de fibre. Les axes d'encoche sont de préférence disposés selon ladite bissectrice.

Selon un mode de réalisation, les orientations de fibre, et l'orientation des axes d'encoche, sont définies entre +90° et -90° autour d'un axe de référence, ledit axe de référence correspondant de préférence à un axe principal de la pièce, par exemple à l'axe de charge principal de la pièce, les axes d'encoche sont orientés selon une orientation la plus éloignée de l'axe de référence, à plus ou moins 10°, de préférence à plus ou moins 5°, mieux encore à plus ou moins 2,5°. Lorsque la préforme comprend au moins deux orientations de fibre différentes, les axes d'encoche sont alors orientés à plus ou moins 10° près, de préférence à plus ou moins 5°, mieux encore à plus ou moins 2,5°, selon la bissectrice formant l'angle le plus important avec l'axe de référence, de sorte que les axes d'encoche soient disposés le plus loin de la ou les orientations les plus proches de l'axe de référence.

Selon un mode de réalisation, les axes d'encoche forment un angle d'au moins 15° avec chaque orientation de fibre, de préférence d'au moins 22,5°.

Selon un mode de réalisation, l'aiguilletage est réalisé au moyen d'aiguille à fourche présentant chacune à son extrémité distale au moins une encoche, de préférence une seule encoche. L'aiguilletage est réalisé au moyen d'aiguilles à fourche, de préférence avec une profondeur de pénétration d'aiguille comprise entre 1 et 10 mm, de préférence entre 2 et 6 mm. L'utilisation d'aiguilles à fourche permet d'obtenir un aiguilletage efficace des filaments, sans détérioration des fibres de la préforme.

Selon différents modes de réalisation, la préforme est formée
- de plis avec des orientations de fibre à 0° et 90° par rapport à un axe de référence, les axes d'encoche sont disposés à +45° et/ou -45°, de préférence à +45° ou -45° ; ou
- de plis avec des orientations de fibre à +30° et -30° par rapport à un axe de référence, les axes d'encoche sont disposés à 0° ou 90°, de préférence à 90°; ou
- de plis avec des orientations de fibre à 0°, 90°, +45° et -45° par rapport à un axe de référence, les axes d'encoche sont disposés à +22,5°, -22,5°, +67,5° et/ou -67,5°, de préférence à +67,5° et/ou -67,5°, mieux encore à +67,5° ou -67,5 ; ou
- de plis avec des orientations de fibre à 0° +60°, et -60° par rapport à un axe de référence, les axes d'encoche sont disposés à 90°, +30°, ou - 30°, de préférence à 90°; ou
- de plis avec des orientations de fibre à 0° +30°, et -30° par rapport à un axe de référence, les axes d'encoche sont disposés à 90°,
les orientations des axes d'encoche définies ci-dessus étant à plus ou moins 10° près, de préférence à plus ou moins 5°, mieux encore à plus ou moins 2,5°.

La préforme peut présenter des zones avec des superpositions de plis différentes et donc des combinaisons d'orientations de fibre différentes d'une zone à l'autre. Dans un tel cas, l'orientation des axes d'encoche peut varier d'une zone à l'autre de la préforme suivant les combinaisons d'orientation de fibre.

Selon un mode de réalisation, ladite préforme comprend lors de l'aiguilletage un agent lubrifiant, appelé également agent de lubrification, pour réduire les frottements entre les aiguilles et les fibres de la préforme, et ainsi de réduire les ruptures de fibres de la préforme dues aux frottements. Les aiguilles pénètrent mieux à travers la préforme et le transfert de filaments à travers la préforme est ainsi amélioré. Par ailleurs, en cas de rupture de fibres, l'agent lubrifiant limite, voir supprime, la dispersion des fibrilles générées, l'agent lubrifiant piégeant les fibrilles dans la préforme, par simple capillarité et/ou en raison des fibrilles qui sont alourdies par l'agent lubrifiant.

Selon différents modes de réalisation,
- l'agent lubrifiant comprend de l'eau, éventuellement de l'eau déminéralisée ou distillée, ou de l'eau savonneuse ; et/ou
- la préforme est humidifiée avant l'étape d'aiguilletage, la préforme comprend au moins 2% en poids d'eau, de préférence au moins 5% en poids d'eau, de préférence de 5 à 40% en poids d'eau, mieux encore de 10% à 40% en poids d'eau ; et/ou
- l'agent lubrifiant est appliqué sur la préforme et/ou les filaments non tissés, avant l'opération d'aiguilletage, par exemple par pulvérisation ; et/ou
- le procédé comprend une étape de séchage de la préforme après aiguilletage, par exemple par séchage mécanique par pressage combiné éventuellement à une aspiration, et/ou par passage dans une étuve ou un four, et/ou par séchage par infrarouge, par radiofréquences ou par microondes.

Les fibres dites sèches peuvent être munies d'une faible quantité d'un premier polymère, appelé liant, suffisante pour assurer une liaison des différents plis de la préforme, la préforme dite sèche étant par la suite soumise à une opération d'ajout d'un polymère dit d'imprégnation pour constituer la matrice de la pièce composite finale.

Les fibres peuvent être munies d'une quantité de premier polymère suffisante pour former la matrice finale de la pièce composite, le premier polymère pouvant être un polymère thermodurcissable ou thermoplastique, par exemple sous forme de poudre, d'un ou plusieurs voiles et/ou de fils.

Selon une variante de réalisation, les fibres continues sont munies d'un deuxième polymère, formant avec le premier polymère la matrice ou constituant un liant, le drapage étant réalisé en appliquant un chauffage pour chauffer le deuxième polymère afin de le rendre collant, le premier polymère restant peu ou pas collant.

Selon d'autres modes de réalisation, l'agent lubrifiant est présent dans les fibres et/ou le(s) polymère(s) utilisés pour la réalisation de la préforme. Selon un mode de réalisation, les fibres et/ou le(s) polymères constituant la préforme sont saturés en eau, cette eau présente dans les fibres et/ou le(s) polymère(s) au moment de la réalisation de la préforme constituant l'agent lubrifiant.

Selon un mode de réalisation, l'agent lubrifiant est présent dans le premier polymère et est un adjuvant de type lubrifiant interne et/ou agent de démoulage utilisé pour la mise en oeuvre de polymère.

De préférence, le procédé comprend la réalisation d'une préforme non tissée, formée de plusieurs plis superposés, chacun formé à partir de fibres continues unidirectionnelles. Selon un mode de réalisation, le procédé comprend la réalisation d'une préforme initiale dite sèche comprenant plusieurs plis superposés, lesdits plis étant formés à partir de fibres sèches continues unidirectionnelles, munies d'un liant comprenant un premier polymère, ledit procédé comprenant après l'étape d'aiguilletage, une étape d'imprégnation de la préforme sèche avec un polymère d'imprégnation, appelé quatrième polymère, formant la matrice polymère par exemple par injection et/ou infusion, pour former une pièce en matériau composite.

Ladite étape d'imprégnation est de préférence effectuée à une température supérieure à la température de transition vitreuse, et de préférence inférieure à la température de fusion du premier polymère formant le liant. Les préformes sèches sont obtenues par application de fibres sèches munies d'un liant et/ou par application de fibres sèches sans liant, et application de liant, par exemple par pulvérisation d'un liant liquide et/ou projection d'un liant sous forme de poudre, sur la surface d'application et/ou sur les fibres sèches préalablement drapées. La préforme sèche comprend moins de 10% en poids de liant, de préférence moins de 5% en poids de liant.

Dans le cas d'une telle préforme sèche, les filaments aiguilletés positionnés dans la direction Z, dans l'épaisseur de la préforme, stabilisent la préforme sèche et permettent d'augmenter la cohésion de la préforme sèche pour l'étape ultérieure d'imprégnation, et ainsi d'éviter un délaminage de la préforme lors de l'imprégnation, notamment dans le cas d'injection de polymère d'imprégnation. Par ailleurs, les perforations créées par les aiguilles et les filaments aiguilletés positionnés en Z augmentent la perméabilité en Z de la préforme sèche, dans l'épaisseur de la préforme.

L'imprégnation est ainsi facilitée et peut être effectuée à des cadences élevées, sans zones sèches, et sans détérioration de la préforme. A l'issue de l'étape d'imprégnation, la pièce en matériau composite comprend au moins 30% en poids de polymère d'imprégnation, le polymère d'imprégnation constituant la matrice de la pièce en matériau composite. L'étape d'imprégnation peut consister en une étape d'injection de la préforme sèche placée dans un moule d'injection.

L'étape d'imprégnation peut par exemple être réalisée selon un procédé d'imprégnation par voie humide, un procédé d'infusion sous vide, un procédé LCM, un procédé RTM, HP-RTM, Gap-RTM ou VARTM. Selon un mode de réalisation, l'étape d'imprégnation consiste en une étape d'injection de la préforme sèche placée dans un moule d'injection, l'injection étant réalisée à une pression d'au moins 10 bars, par exemple de l'ordre de 50 bars.

Selon un autre mode de réalisation, les fibres sont munies d'une quantité de premier polymère suffisante pour former la matrice finale. Lors du drapage le premier polymère est chauffé pour assurer une liaison des différents plis. Après aiguilletage, la préforme est soumise à une opération de chauffage éventuellement combinée à une opération de formage pour chauffer l'ensemble du premier polymère et créer la matrice.

Selon un autre mode de réalisation, les fibres sont munies d'un deuxième polymère, formant avec le premier polymère la matrice ou constituant un liant.

Dans le cas d'un deuxième polymère formant la matrice, la matrice est formée d'une partie majoritaire de premier polymère, le deuxième polymère formant par exemple jusqu'à 20% en poids de la matrice. Le deuxième polymère peut se présenter sous une forme de poudre, de voile(s) et/ou de fils, et être présent avec le premier polymère sur les fibres avant la réalisation de la préforme.

Dans le cas d'un deuxième polymère constituant un liant, les préformes sont obtenues par application de fibres munies du premier polymère et du liant et/ou par application de fibres munies uniquement du premier polymère, et application de liant, par exemple par pulvérisation d'un liant liquide et/ou projection d'un liant sous forme de poudre, sur la surface d'application et/ou sur les fibres préalablement drapées. La préforme comprend moins de 10% en poids de liant, de préférence moins de 5% en poids de liant.

Selon un mode de réalisation, les filaments non tissés appliqués lors de l'étape d'application sont formés à partir d'au moins un troisième polymère, ladite étape d'imprégnation étant alors effectuée à une température inférieure à la température de fusion, et de préférence supérieure à la température de transition vitreuse dudit troisième polymère, de sorte que les filaments assurent un bon maintien des fibres de la préforme lors de l'étape d'imprégnation, notamment sa tenue mécanique au délaminage.

Le premier polymère constituant un liant, l'éventuel deuxième polymère et l'éventuel troisième polymère peuvent être différents ou identiques ou de même famille.

Selon un mode de réalisation, le troisième polymère formant le liant et/ou le deuxième polymère formant les filaments est un polymère thermoplastique, de préférence choisi dans le groupe constitué par les polyamides, notamment les polyamides aromatiques (aramides), polyesters tels que le polyéthylène téréphtalate, polyéthersulfones, polyétheréthercétones, polysulfures de phénylène, polyuréthanes, époxydes, polyoléfines, acide polylactique, polyacryliques, et leurs mélanges.

Dans le cas de polymère thermodurcissable, le premier polymère constituant un liant, l'éventuel deuxième polymère et le troisième polymère sont par exemple choisis dans le groupe constitué par les époxydes, polyesters, vinylesters, phénoliques, polyimides, bismaléimides, et leurs mélanges.

Le quatrième polymère d'imprégnation est différent du premier polymère constituant un liant, l'éventuel deuxième polymère et l'éventuel troisième polymère, et est de préférence choisi dans les groupes de polymères précités.

Le premier polymère, lorsqu'il forme la matrice, est différent des éventuels deuxième polymère et troisième polymère lorsqu'ils sont présents, et est de préférence choisi dans les groupes de polymères précités.

Selon d'autres modes de réalisation, les filaments non tissés appliqués sur la préforme sont des fibres minérales, notamment des fibres céramiques telles que des fibres de verre, des fibres de carbone, ou des fibres métalliques, les filaments permettant de renforcer la préforme ainsi que la pièce finale dans l'épaisseur.

Selon un mode de réalisation, la préforme est obtenue par un procédé de placement de fibres, connu en soi. Selon un mode de réalisation, la réalisation de la préforme comprend la réalisation de plis superposés, par application au contact, au moyen d'un rouleau d'application, de fibres continues, de préférence unidirectionnelles sur un outillage de drapage, chaque pli étant réalisé par application d'une ou plusieurs bandes selon une orientation sur l'outillage de drapage ou sur des bandes du pli précédent, chaque bande étant formée d'une ou plusieurs fibres continues.

Le placement de fibres est avantageusement automatisé au moyen d'une tête de placement de fibres, connue en soi, comportant un rouleau de compactage destiné à venir en contact contre l'outillage pour appliquer une bande formée d'une ou plusieurs fibres plates continues, et un système de guidage pour guider la ou les fibres sur ledit rouleau, par déplacement relatif de la tête d'application par rapport à la surface de drapage selon différentes trajectoires. La préforme comprend par exemple de 2 à 100 plis superposés.

Lesdites fibres continues se présentent de préférence sous la forme de fibres continues unidirectionnelles plates, classiquement appelées mèches, comprenant une multitude de filaments. Les fibres présentent par exemple des largeurs d'un huitième de pouce, un quart de pouce ou un demi-pouce (1/8", 1/4" ou 1/2"). Dans la présente, le terme «fibres» désigne également des fibres de plus grande largeur, supérieure à 1/2 pouce, classiquement appelée bande dans la technologie du placement. 1 pouce correspond à 2.54 cm.

En variante, les fibres peuvent être fixées sur le moule, par exemple mécaniquement ou par collage, uniquement en début et en fin de trajectoire, le rouleau étant de préférence en contact en début et en fin de trajectoire, et éventuellement à distance de la surface sur le reste de la trajectoire.

Selon d'autres modes de réalisation, l'aiguilletage selon l'invention est utilisé en remplacement de l'opération de couture effectuée lors de la fabrication d'un tissu multiaxial NCF, la préforme comprend alors plusieurs plis superposés, sans liant, l'aiguilletage des filaments appliqués sur la préforme est par exemple réalisé en maintenant mécaniquement les fibres des plis de la préforme, par exemple par des systèmes de picots autour desquels les fibres passent. La préforme aiguilletée résultante est alors soumise à une opération d'imprégnation pour former la pièce en matériau composites.

Selon un mode de réalisation, le procédé comprend une étape de thermoformage de la préforme renforcée obtenue après l'étape d'aiguilletage de préférence entre l'outillage de formage mâle et l'outillage de formage femelle d'une presse pour obtenir une préforme tridimensionnelle. En variante, le formage est réalisé au moyen d'un bâche à vide, après positionnement de al préforme sur un outillage de formage

Dans le cas de filaments en un troisième polymère, le thermoformage est réalisé à une température de thermoformage inférieure à la température de fusion du troisième polymère, et de préférence supérieure à la température de transition vitreuse du troisième polymère,

Dans le cas d'une préforme sèche avec un liant formé du premier polymère, la préforme tridimensionnelle obtenue après le thermoformage est soumise à l'étape d'imprégnation.

Le formage est de préférence réalisé à une température de formage inférieure à la température de fusion du premier polymère formant la matrice, du premier polymère formant le liant ou du deuxième polymère, et de préférence supérieure à la température de transition vitreuse dudit premier ou deuxième polymère. Le formage est réalisé à chaud, la préforme initiale étant chauffée à une température de formage avant et/ou pendant le formage afin d'augmenter la formabilité de la préforme. La préforme initiale peut être préchauffée avant le formage par passage dans un four ou tunnel et/ou la préforme peut-être chauffée lors du formage, par exemple par chauffage de l'outillage de formage mâle et/ou l'outillage de formage femelle. De préférence, la préforme est uniquement préchauffée par passage dans four ou tunnel, les outillages de la presse n'étant pas chauffés, simplifiant ainsi les outillages de presse.

En l'absence d'aiguilletage, la déformation de la préforme lors du formage s'effectue fibre par fibre. L'opération d'aiguilletage de la préforme selon l'invention préalablement à l'opération de formage permet d'obtenir une déformation homogène de la préforme, du fait du glissement des filaments aiguilletés.

Par ailleurs, les filaments du feutre présents sur chaque face principale de la préforme permettent un glissement de la préforme dans la presse sans adhérence. Les filaments extérieurs stabilisent les surfaces extérieures de la préforme en limitant, voire supprimant, les déformations locales de la préforme et assurent ainsi une déformation homogène des fibres de la préforme. Le procédé selon l'invention permet ainsi de favoriser les mécanismes de glissement entre les outillages de formage et la préforme, et ainsi de limiter, voire supprimer, les défauts de fibres des plis externes des préformes résultant des frictions entre la préforme et les outillages de formage dans les procédés de formage antérieurs.

La préforme initiale peut être bidimensionnelle, obtenue par drapage sur la surface plane d'un outillage, ou tridimensionnelle, le formage pouvant alors être effectué pour obtenir des pièces tridimensionnelles de forme complexe ne pouvant être obtenues par drapage, notamment par placement de fibres.

La densité d'aiguilletage est définie notamment en fonction de la perméabilité et de la stabilisation recherchées, et du type d'aiguille utilisée. Selon un mode de réalisation, la densité d'aiguilletage lors de l'étape d'aiguilletage est comprise entre 10 et 350 coups/cm². Dans le cas d'un dispositif d'aiguilletage muni d'aiguilles à fourche, la densité d'aiguilletage est de préférence de 150 à 350 coups/cm², mieux encore de 200 à 300 coups/cm². Dans le cas d'un dispositif d'aiguilletage muni d'aiguilles à barbes, comprenant chacune plusieurs encoches, la densité d'aiguilletage est de préférence de 10 à 100 coups/cm², mieux encore de 40 à 60 coups/cm².

La partie travaillante des aiguilles a de préférence un diamètre compris entre 0,30 et 0,60 mm, de préférence entre 0,40 et 0,50 mm (jauges de 38 à 42).

La largeur et/ou la profondeur des encoches, de préférence la largeur et la profondeur des encoches, sont comprises entre 0,03 et 0,1 mm, de préférence entre 0,04 et 0,06 mm.

La longueur des filaments est définie en fonction de l'épaisseur de la préforme, de préférence de sorte que les filaments aiguilletés traversent la préforme. Par ailleurs, les filaments aiguilletés doivent de préférence être suffisamment longs pour rester entremêlés sur la première face de la préforme, et ainsi assurer une meilleure stabilité de la préforme.

Selon un mode de réalisation, les filaments appliqués sur la préforme ont une longueur comprise entre 10 et 100 mm, de préférence entre 40 et 60 mm, et un diamètre compris entre 5 et 50 µm, de préférence 10 à 35 µm.

Selon un mode de réalisation, l'aiguilletage est réalisé de sorte que des filaments transférés par les aiguilles dépassent de la deuxième face principale de la préforme qui est opposée à la première face principale sur laquelle les filaments ont été appliqués, sur une longueur comprise entre 1 et 10 mm, de préférence de 2 à 6 mm, certain de ces filaments pouvant former des boucles dépassant de la deuxième face de la préforme.

Selon un mode de réalisation, ladite étape d'application de filaments comprend l'application d'un voile ou feutre non tissé formé desdits filaments. Les feutres utilisés peuvent être isotropes, avec des filaments orientés de manière aléatoire, ou des feutres orientés avec des filaments présentant une orientation préférentielle. Dans le cas de feutres orientés, les aiguilles, et plus particulièrement leurs axes d'encoche, sont disposées en fonction de l'orientation des filaments de manière à optimiser le taux de prise de filaments par les aiguilles, les axes d'encoche formant de préférence un angle nul avec l'orientation préférentielle des filaments du feutre. Selon un mode de réalisation, le feutre présente une masse surfacique de 5 à 100 g/m², et/ou la préforme munie de filaments comprend de 1 à 10% en poids de filaments, de préférence de 2 à 5% en poids de filaments.

Une partie des filaments du feutre est transférée à travers la préforme, les filaments non transférés présents sur la première face principale peuvent être retirés par pelage du feutre ou non.

Selon un mode de réalisation, le reste de feutre est maintenu sur la préforme pour l'étape d'imprégnation, la structure non tissée des feutres augmente la perméabilité de la préforme et permet ainsi de favoriser l'infusion et/ou injection, les feutres conférant un effet drainant, plus particulièrement dans le cas d'une infusion. Les feutres peuvent en outre augmenter la tenue au choc de la préforme et/ou améliorer l'aspect de surface de la préforme.

L'invention a également pour objet une préforme renforcée aiguilletée telle qu'obtenue à l'issue de l'étape d'aiguilletage du procédé décrit précédemment, ainsi qu'une pièce en matériau composite telle qu'obtenue selon le procédé décrit précédemment, à partir d'une ou plusieurs préforme renforcée aiguilletée.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en coupe d'un exemple de pièce tridimensionnelle en matériau composite réalisée selon le procédé selon l'invention ;
- la figure 2 est une vue schématique de côté illustrant l'opération de drapage de la préforme sèche initiale ;
- la figure 3 est une vue schématique de dessus de la préforme obtenue après drapage de quatre premiers plis, sur laquelle les plis sont représentés partiellement pour illustrer l'orientation desdits plis ;
- la figure 4 est une vue schématique de côté illustrant l'opération d'aiguilletage d'un feutre de fibres non tissé appliqué sur la préforme ;
- la figure 5 est une vue schématique d'une aiguille à fourche utilisable dans le dispositif d'aiguilletage,
- la figure 6A est une vue agrandie partielle de la figure 5 et la figure 6B est une vue selon le plan VIB-VIB de de la figure 6A ;
- la figure 7 est une vue partielle schématique en coupe de la préforme après aiguilletage ;
- la figure 8 est une vue schématique illustrant l'orientation des encoches des aiguilles par rapport aux orientations de fibre à 0°, +45°, - 45° et 90° des plis de la préforme ;
- les figures 9 et 10 sont des vues en coupe de la presse illustrant l'opération de formage de la préforme obtenue après aiguilletage ;
- la figure 11 est une vue schématique en coupe du moule d'injection illustrant l'opération d'injection de la préforme obtenue après thermoformage ;
- la figure 12 est une vue analogue à celle de la figure 6A illustrant une aiguille à barbe utilisable dans le dispositif d'aiguilletage ;
- la figure 13 est une vue analogue à la figure 8, illustrant l'orientation des encoches des aiguilles par rapport à des orientations de fibre à +30° et -30° d'une autre préforme ; et,
- la figure 14 est une vue analogue à la figure 8, illustrant l'orientation des encoches des aiguilles par rapport à des orientations de fibre à 0, +60° et -60° d'une autre préforme.

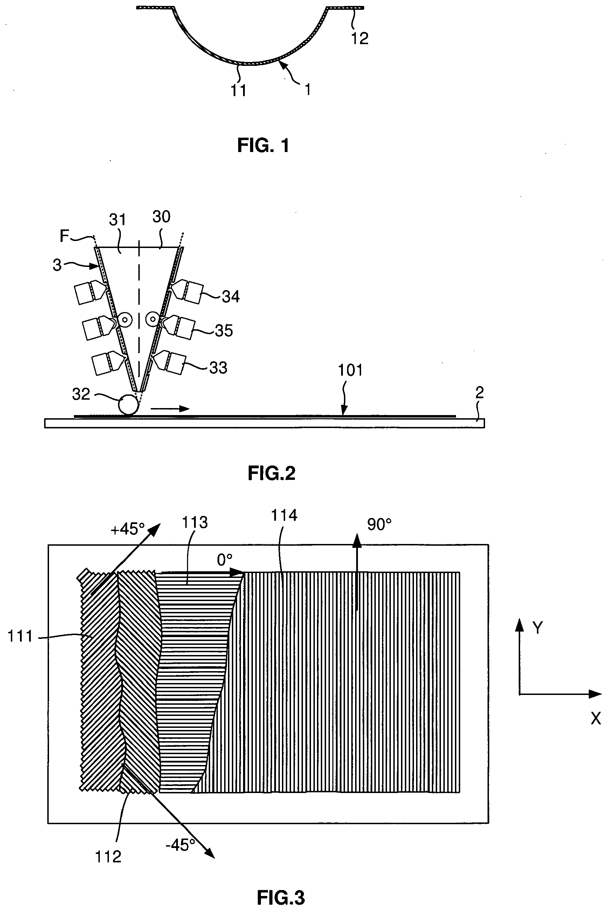

La Figure 1 illustre un exemple de pièce en matériau composite tridimensionnelle 1 réalisable selon un procédé de l'invention, comprenant le drapage de fibres continues pour former une préforme sèche plane, l'application d'un feutre de fibres non tissé sur la préforme et l'aiguilletage dudit feutre, le formage de la préforme puis son imprégnation. La pièce présente ici la forme d'une calotte sphérique 11 avec un rebord annulaire 12.

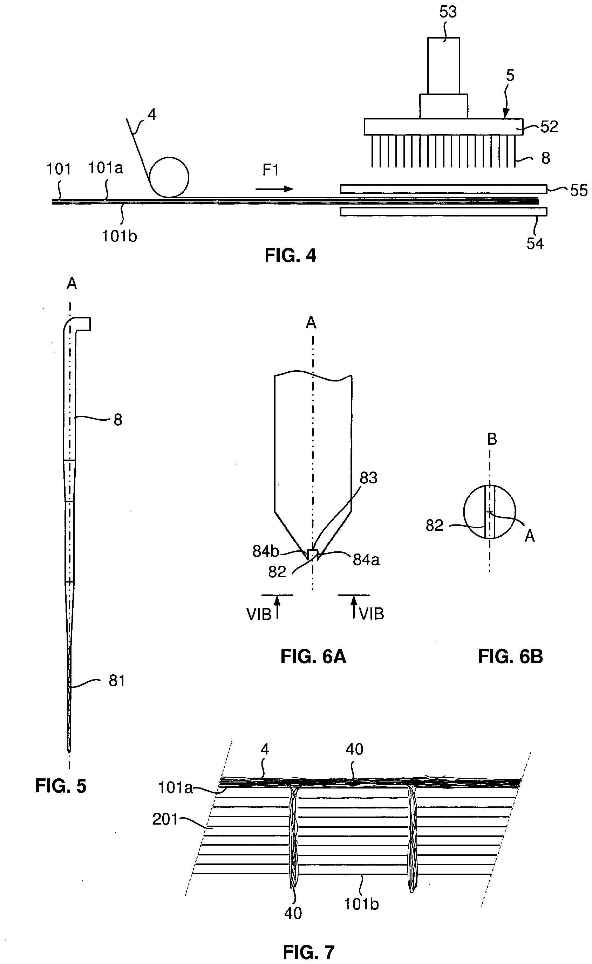

Dans une première étape, tel qu'illustré à la figure 2, des plis de fibres continues unidirectionnelles sont drapés à plat sur un outillage de drapage 2 dans des orientations différentes, pour former une plaque ou préforme sèche 101 initiale bidimensionnelle présentant deux faces principales opposées 101a, 101b (Fig 4).

Le drapage est effectué au moyen d'un dispositif de drapage 3 comprenant une tête 30 de placement de fibres, connue en soi, permettant le drapage automatique au contact de bandes formées d'une ou plusieurs fibres. Les fibres F entrent dans la tête 3 sous la forme de deux nappes de fibres, et la tête comprend un système de guidage 31 permettant de guider les fibres vers le rouleau de compactage 32 sous la forme d'une bande de fibres dans laquelle les fibres sont disposées côte à côte, par exemple sensiblement bord à bord. La tête comprend, de part et d'autre du système de guidage, des moyens de coupe 33 pour couper individuellement chaque fibre passant dans le système de guidage, des moyens de blocage 34 pour bloquer chaque fibre venant d'être coupée, et des moyens de réacheminement 35 pour entraîner individuellement chaque fibre, ceci afin de pouvoir à tout moment stopper et reprendre l'application d'une fibre, ainsi que choisir la largeur de la bande. Le drapage d'une bande est réalisé par déplacement relatif de la tête par rapport à la surface de drapage sensiblement plane de l'outillage de drapage. La tête comprend par exemple une structure support (non représentée) sur laquelle est monté le système de guidage et par laquelle la tête peut être assemblée à un système de déplacement, apte à déplacer la tête selon au moins deux directions perpendiculaires l'une à l'autre. La tête est par exemple prévue pour recevoir huit fibres, et permettre l'application de bandes de 1 à 8 fibres de 6,35 mm (1/4 de pouce) de large.

La tête est ici utilisée pour la réalisation d'une préforme sèche, à partir de fibres sèches munies d'un liant classiquement appelé « binder », pour conférer un caractère collant aux fibres lors du drapage et assurer la cohésion de la préforme. Le liant, constitué d'un polymère, peut être appliqué sur les fibres avant le drapage, par exemple sous la forme de voile et/ou de poudre, des bobines de fibres pré-munies de liant étant alors chargées dans la machine de placement de fibre. Le liant peut être appliqué en ligne, lors du drapage des fibres, par exemple directement sur les fibres à draper, par exemple sous forme de filaments, tel que décrit dans la demande de brevet français n° 16 70088, déposée le 7 mars 2016 et ayant pour titre « Procédé de réalisation de préformes avec application de liant sur fibre sèche, et machine correspondante ».

Dans le cas notamment de fibres pré-munies de liant, la tête 3 est de préférence équipée d'un système de chauffage (non représenté), par exemple de type lampe IR ou laser, afin de chauffer le liant en cours d'application des fibres, et ainsi permettre au moins une adhésion des fibres des différents plis. Le système de chauffage chauffe les fibres avant leur application sur la surface d'application, ainsi que la surface d'application ou les fibres préalablement déposées, en amont du rouleau par rapport à la direction d'avancement de la tête.

Les fibres sont par exemple des fibres de carbone, plates continues, de type mèches, comprenant une multitude de fils ou filaments de carbone, avec un liant thermoplastique présent en quantité de l'ordre de 2% en poids.

La préforme est formée de plis avec des orientations de fibre différentes, les orientations étant définies de manière classique par rapport à un axe X de référence, correspondant classiquement à un axe principal de la pièce à réaliser, et éventuellement à l'axe principal de charge de la pièce.

Les orientations de fibre à α et (α ± 180°) sont équivalentes. De manière classique, les orientations de fibre sont définies entre +90° et -90° par rapport à l'axe X, les orientations de fibre à +90° et -90° étant équivalentes.

A titre d'exemple, la préforme est formée de huit plis de fibres, selon l'empilement suivant : +45°/-45°/0°/90°/90°/0°/-45°/+45°.

La figure 3 illustre de manière schématique les orientations de fibre des quatre premiers plis drapés :
- un premier pli 111 avec une première orientation à +45° ;
- un deuxième pli 112 avec une deuxième orientation de fibre à -45° ;
- un troisième pli 113 avec une troisième orientation de fibre à 0°, et,
- un quatrième pli 114 avec une troisième orientation de fibre à 90°.

Après réalisation de la préforme, un feutre 4 de filaments ou fibres 40 non tissé est appliqué sur une première face principale 101a de la préforme sèche, et la préforme ainsi munie du feutre est soumise à une opération d'aiguilletage, tel qu'illustré schématiquement à la figure 4, par passage dans un dispositif d'aiguilletage ou aiguilleteuse 5.

L'aiguilleteuse 5, connue en soi pour consolider des nappes de fibres, comprend une pluralité d'aiguilles 8 montées sur un support 52 ou planche à aiguilles, apte à être animé, par des moyens 53 appropriés, d'un mouvement de va-et-vient dans une direction parallèle aux aiguilles. L'aiguilleteuse comprend une table support 54 ajourée disposée en vis à vis des aiguilles et destinée à supporter la préforme, ainsi qu'un débourreur ou dévêtisseur 55 placé entre la table support et les aiguilles, muni de trous traversant pour le passage des aiguilles. La table support comprend également un ensemble de trous pour permettre le passage des aiguilles après qu'elles aient traversé la préforme.

L'aiguilleteuse est équipée ici d'aiguilles 8 dites à fourche, d'axe longitudinal A, tel qu'illustré aux figures 5, 6A et 6B, chaque aiguille comprenant à l'extrémité de sa portion distale ou partie travaillante 81 une encoche 82, de sorte que l'aiguille entraine les filaments uniquement lors de la phase de pénétration, soit de haut en bas sur la figure 4. L'encoche 82 est définie entre une paroi de fond 83 et deux parois latérales 84a, 84b et présente un axe B, dit axe d'encoche, disposé parallèlement auxdites parois 83, 84a, 84b, et perpendiculairement à l'axe longitudinal A de l'aiguille.

Pendant l'aiguilletage, la préforme est entraînée positivement dans le sens de la flèche référencée F1, et les aiguilles sont entraînées en va et vient. Lors du déplacement des aiguilles vers le bas, des fibres du feutre se positionnent dans les encoches 51b des aiguilles et sont entraînées au travers de toute l'épaisseur de la préforme, les filaments ressortant sur la deuxième face principale 101b, tel qu'illustré schématiquement à la figure 7. La densité d'aiguilletage est définie en fonction de la fréquence du mouvement en va-et-vient des aiguilles, le nombre d'aiguilles, et la vitesse d'avancement de la préforme dans l'aiguilleteuse.

Selon l'invention, l'aiguilletage est réalisé de sorte que les axes d'encoche fassent un angle non nul avec les orientations de fibre des plis.

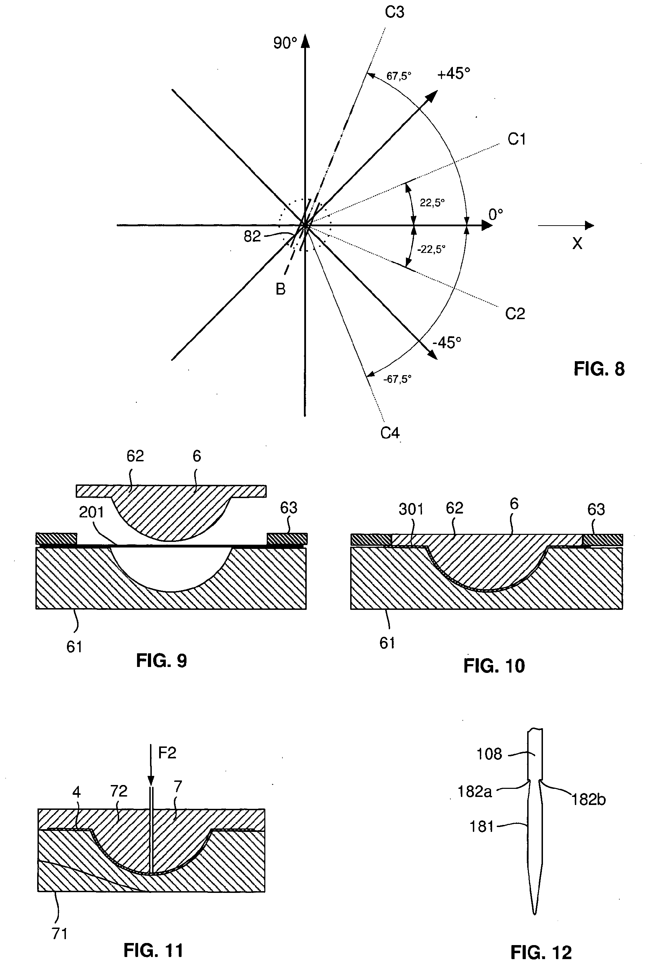

En référence à la figure 8, les axes B d'encoche sont de préférence disposés selon une bissectrice de l'angle entre deux orientations adjacentes, soit
- selon la bissectrice C1 de l'angle entre les orientations de fibre à 0° et +45°, disposée à 22,5° de l'axe X ;
- selon la bissectrice C2 de l'angle entre les orientations de fibre à 0° et -45°, disposée à -22,5° de l'axe X ;
- selon la bissectrice C3 de l'angle entre les orientations de fibre à +45° et 90°, disposée à 67,5° de l'axe X ; et/ou
- selon la bissectrice C3 de l'angle entre les orientations de fibre à - 45° et -90°, disposée à -67,5° de l'axe X.

Selon un mode de réalisation, toutes les aiguilles sont identiques et montée de la même façon sur la planche à aiguille, les axes d'encoche des aiguilles ayant toute la même orientation.

Dans le cas d'une orientation de fibre principale à 0°, correspondant à l'axe X de charge principale de la pièce les axes d'encoche sont orientés à +67,5° ou -67,5°, par exemple à 67,5° tel qu'illustré sur la figure 8, afin d'obtenir un angle maximal entre les axes d'encoche et les fibres orientées à 0°, et ainsi limiter au maximum les risques de casse de ces fibres orientées à 0°.

L'orientation des axes d'encoche par rapport aux orientations de fibre de la préforme est par exemple obtenu en orientant de manière appropriée la préforme entrant dans une aiguilleteuse dont la position est fixe.

De préférence, avant l'opération d'aiguilletage, un agent lubrifiant, également appelé agent de lubrification, est appliqué sur la préforme sèche. L'agent lubrifiant comprend de l'eau et est appliqué par un système de pulvérisation sur la préforme.

Lors de l'aiguilletage, l'eau présente dans la préforme en tant qu'agent lubrifiant permet de réduire les frottements entre les aiguilles et ainsi de réduire l'échauffement de la préforme, ce qui garantit un transfert efficace des filaments du feutre à travers la préforme, limite la casse des fibres, et permet de piéger dans la préforme les éventuelles fibrilles résultant de la casse de fibres. Après l'aiguilletage, la préforme est avantageusement soumise à une opération de séchage afin de réduire la teneur en eau de la préforme ou supprimer toute trace d'eau dans la préforme. Cette opération de séchage est par exemple réalisée en plaçant la préforme dans une étuve.

Après aiguilletage, le reste du feutre formé par les filaments présents sur la première face qui n'ont pas été aiguilletés, peut être maintenu sur la préforme ou être retiré. Selon un mode de réalisation, la densité d'aiguilletage et la profondeur de pénétration des aiguilles, qui est égale à la distance entre l'extrémité de l'aiguille et la deuxième face principale de la préforme, sont définies de sorte que la préforme présente une quantité de filaments, de préférence similaires, sur chacune de ses faces, ces filaments en surface augmentant la perméabilité de la préforme, et facilitent par ailleurs l'opération de formage.

Selon une variante de réalisation, les filaments ne sont pas appliqués sous la forme d'un feutre, mais projetés de manière aléatoire sur la première face de la préforme.

La préforme munie de filaments aiguilletés, appelée préforme renforcée 201, est ensuite transférée vers une presse pour l'opération de formage, également appelée opération d'emboutissage. Tel qu'illustré à la figure 9, la presse 6 comprend un outillage de formage femelle 61 ou matrice, présentant un renfoncement dont la forme correspond à celle de la calotte sphérique 12 de la préforme à réaliser, et un outillage de formage mâle 62, ou poinçon, comprenant un bossage de forme complémentaire. Le formage est réalisé par rapprochement relatif de l'outillage de formage mâle et de l'outillage de formage femelle, d'une position ouverte de la presse illustrée à la figure 9 vers une position fermée de la presse illustrée à la figure 10.

Le formage est réalisé à chaud, la préforme étant à une température de formage comprise entre la température de transition vitreuse et la température de fusion du polymère constituant le liant, et entre la température de transition vitreuse et la température de fusion du polymère formant les filaments du feutre. Cette température de formage de la préforme est obtenue par préchauffage de la préforme avant positionnement dans la presse et/ou par chauffage des deux outillages 61, 62. Ce préchauffage est par exemple réalisé par passage de la préforme initiale entre les rampes de lampe infrarouge supérieure et inférieure d'un four ou tunnel de préchauffage. De préférence, lors du formage, la préforme est maintenue sous tension par un système de mise sous tension, par exemple de type serre-flan, tel que représenté de manière schématique sous la référence 63. Les outillages 61, 62 sont ensuite écartés l'un de l'autre en position ouverte pour pouvoir démouler la préforme renforcée tridimensionnelle 301 de la presse.

La préforme renforcée tridimensionnelle 301 résultante est ensuite soumise à une opération d'ajout ou d'imprégnation d'un polymère d'imprégnation, thermodurcissable ou thermoplastique, par un procédé d'injection et/ou infusion. En référence à la figure 11, la préforme renforcée tridimensionnelle est par exemple placée dans un moule d'injection 7, entre la partie male et la partie femelle dudit moule, un polymère d'imprégnation est injecté sous pression dans la préforme, selon un procédé de type RTM (Resin Transfer Moulding), ou Gap-RTM, tel qu'illustré de manière schématique par la flèche référencée F2. La pièce composite 1 obtenue à l'issue de cette étape d'imprégnation peut être soumise à une opération de détourage.

En variante, l'aiguilleteuse est équipée d'aiguilles à fourche comprenant plusieurs encoches à son extrémité. Selon un autre mode de réalisation, l'aiguilleteuse est équipée d'aiguilles 108 dites à barbes, tel qu'illustré à la figure 12, comprenant le long de sa portion distale ou portion travaillante 181 une ou plusieurs encoches, orientées en direction de l'extrémité de l'aiguille, par exemple deux encoches 182a, 182b, disposées symétriquement de part et d'autre de l'axe longitudinal, et dont les axes d'encoche sont disposés parallèlement.

A titre d'exemple, une pièce est réalisée selon le procédé suivant :
- Drapage : Drapage d'une préforme par placement de fibres de carbone munies d'un liant appliqué en ligne, formé d'un copolyester thermoplastique ayant un point de fusion de l'ordre de 130°C, et une température de transition vitreuse d'environ 15°C, la préforme étant réalisée en drapant huit plis de fibres dans des orientations différentes, selon l'empilement suivant : +45°/-45°/0°/90°/90°/0°/-45°/+45°.
- Humidification : application d'eau sur la préforme, la préforme résultante comprenant 30% en poids d'eau.
- Application : Application d'un feutre non tissé en filaments ou fibres polyester de 14µm de diamètre, de 40 à 60 mm de longueur, et un point de fusion d'environ 200°C, ledit feutre, d'orientation isotrope, ayant une masse surfacique de 50 g/m².
- Aiguilletage avec des aiguilles à fourche, ayant une partie travaillante de jauge 42 (0,40mm), présentant une encoche ou fourche en extrémité, de 0,05mm de profondeur et 0,05mm de largeur, avec une densité d'aiguilletage de 200 coups/cm² et une profondeur de pénétration de 5 mm, les axes d'encoche étant orientés à 67,5° de l'axe X.
- séchage : séchage de la préforme par passage en étuve au-dessus de 100°C.
- Formage : formage à une température de formage de 120°C.
- Injection : injection de type gap-RTM d'un polymère époxy thermodurcissable en un cycle de trois minutes avec une première phase de compression et chauffage à 120°C d'environ 2 minutes, et une seconde phase d'injection et polymérisation à 50 bars, en tirant le vide, d'environ 1 minute.

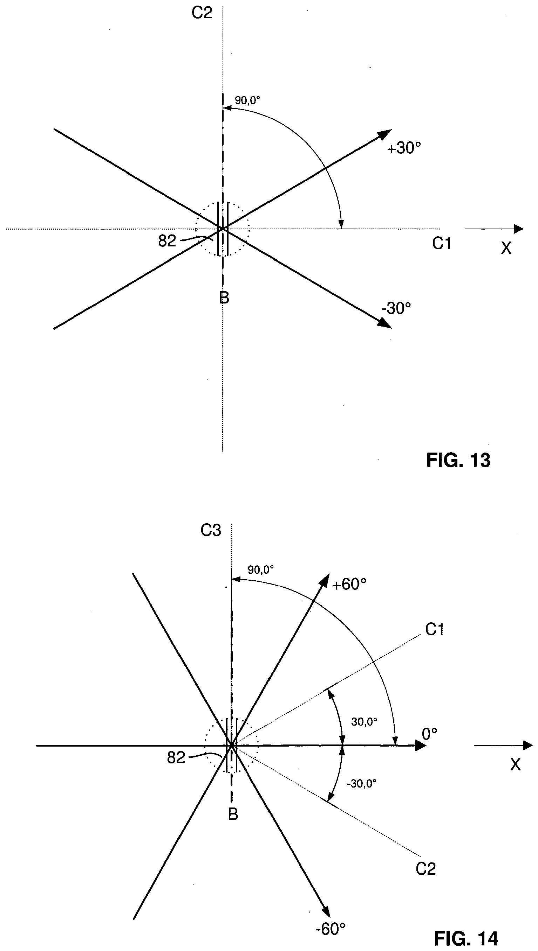

La figure 13 illustre l'orientation des axes B d'encoche lors de l'aiguilletage dans le cas d'une préforme formée de plis avec des orientations de fibre à +30° et -30°. Selon l'invention, les axes B d'encoche sont disposés selon une bissectrice des deux orientations adjacentes, soit
- selon la première bissectrice C1 entre les orientations de fibre à 30° et +30°, disposée à 0° de l'axe X ;
- selon la seconde bissectrice C2 entre les orientations de fibre à 30° et +30°, disposée à 90° de l'axe X.

Tel qu'illustré sur la figure 13, les axes B d'encoche sont de préférence disposés de sorte que l'angle avec l'axe de référence soit maximal, soit selon la seconde bissectrice à 90°.

La figure 14 illustre l'orientation des axes B d'encoche d'une préforme formée de plis avec des orientations de fibre à 0°, +60° et -60°. Les axes B d'encoche sont alors disposés selon une bissectrice de deux orientations adjacentes, soit
- selon la bissectrice C1 entre les orientations de fibre à 0° et 60°, à 30° de l'axe X ;
- selon la bissectrice C2 entre les orientations de fibre à 0° et -60°, à -30° de l'axe X ; et/ou
- selon la bissectrice C3 entre les orientations de fibre à -60° et +60°, à 90° de l'axe X.

Tel qu'illustré sur la figure 14, les axes B d'encoche sont de préférence disposés de sorte que l'angle avec l'axe de référence soit maximal, soit selon la bissectrice C3 à 90°.

## Revendications

1. Procédé de réalisation d'une pièce (1) en matériau composite comprenant des fibres continues et une matrice polymère, ledit procédé comprenant
- une étape de réalisation d'une préforme (101) formée de fibres continues unidirectionnelles orientées selon au moins une orientation de fibre,
- une étape d'application de filaments (40) non tissés sur au moins une première face principale (101a) de la préforme, et
- une étape d'aiguilletage desdits filaments au moyen d'un dispositif d'aiguilletage (5) comprenant une pluralité d'aiguilles (8, 108), chacune munie d'au moins une encoche, de sorte que des filaments soient entraînés par les aiguilles et disposés dans une direction sensiblement perpendiculaire aux fibres continues de la préforme,
**caractérisé en ce que**, pour l'étape d'aiguilletage, chaque aiguille est munie d'une seule encoche (82) s'étendant selon un axe (B) d'encoche perpendiculaire à l'axe (A) principal longitudinal de l'aiguille, ou de plusieurs encoches (182a, 182b) s'étendant chacune selon un axe d'encoche perpendiculaire à l'axe principal longitudinal de l'aiguille, lesdits axes d'encoche étant parallèles entre eux, lesdites aiguilles et la préforme étant disposées de sorte que les axes d'encoche forment un angle non nul avec la ou les orientations de fibre.

2. Procédé selon la revendication 1, **caractérisé en ce que** la préforme (101) est formée de plusieurs plis superposés (111-114), chaque pli étant formé de fibres continues unidirectionnelles orientées selon une orientation de fibre, ladite préforme comprenant des plis ayant au moins deux orientations de fibre différentes, lesdites aiguilles et la préforme étant disposées de sorte que les axes d'encoche forment avec chacune des deux orientations de fibre un angle non nul lors de l'aiguilletage.

3. Procédé selon la revendication 2, **caractérisé en ce que** ladite préforme (101) comprend des plis d'orientations de fibre différentes, les axes (B) d'encoche forment avec chaque orientation de fibre un angle non nul lors de l'aiguilletage.

4. Procédé selon la revendication 2 ou 3, **caractérisé en ce que** les axes (B) d'encoche sont disposés sensiblement selon une bissectrice (C1-C4) de deux orientations de fibre adjacentes, à plus ou moins 10°, de préférence à plus ou moins 5°, mieux encore à plus ou moins 2,5°.

5. Procédé selon l'une des revendications 1 à 4, **caractérisé en ce que** les orientations de fibre sont définies entre +90° et -90° autour d'un axe (X) de référence, les axes d'encoche sont orientés selon une orientation la plus éloignée de l'axe de référence.

6. Procédé selon l'une des revendications 1 à 5, **caractérisé en ce que** les axes (B) d'encoche forment un angle d'au moins 15° avec chaque orientation de fibre, de préférence d'au moins 22,5°.

7. Procédé selon l'une des revendications 1 à 6, **caractérisé en ce que** l'aiguilletage est réalisé au moyen d'aiguilles (8) à fourche présentant chacune à son extrémité distale au moins une encoche (82).

8. Procédé selon l'une des revendications 1 à 7, **caractérisé en ce que** la préforme est formée
- de plis avec des orientations de fibre à 0° et 90° par rapport à un axe (X) de référence, les axes d'encoche sont disposés à +45° et/ou -45°, de préférence à +45° ou -45° de l'axe de référence ; ou
- de plis avec des orientations de fibre à +30° et -30° par rapport à un axe (X) de référence, les axes d'encoche sont disposés à 0° ou 90°, de préférence à 90° de l'axe de référence ; ou
- de plis avec des orientations de fibre à 0°, 90°, +45° et -45° par rapport à un axe (X) de référence, les axes d'encoche sont disposés à +22,5°, -22,5°, +67,5° et/ou -67,5°, de préférence à +67,5° et/ou -67,5°, mieux encore à +67,5° ou -67,5° de l'axe de référence ; ou
- de plis avec des orientations de fibre à 0°, +60° et -60° par rapport à un axe (X) de référence, les axes d'encoche sont disposés à 90°, +30°, ou -30°, de préférence à 90° de l'axe de référence, ou
- de plis avec des orientations de fibre à 0°, +30° et -30° par rapport à un axe (X) de référence, les axes d'encoche sont disposés à 90° de l'axe de référence.

9. Procédé selon l'une des revendications 1 à 8, **caractérisé en ce que** ladite préforme comprend lors de l'aiguilletage un agent lubrifiant pour réduire les frottements entre les aiguilles et les fibres de la préforme.

10. Procédé selon l'une des revendications 1 à 9, **caractérisé en ce qu'**il comprend la réalisation d'une préforme sèche comprenant plusieurs plis superposés, lesdits plis étant formés à partir de fibres sèches continues munies d'un liant, ledit liant comprenant un premier polymère, ledit procédé comprenant, après l'étape d'aiguilletage, une étape d'imprégnation de la préforme sèche avec un polymère d'imprégnation formant la matrice polymère.

11. Procédé selon l'une des revendications 1 à 10, **caractérisé en ce que** ladite étape d'application de filaments (40) comprend l'application d'un feutre (4) non tissé formé desdits filaments.

12. Procédé selon l'une des revendications 1 à 11, **caractérisé en ce que** la réalisation de la préforme comprend la réalisation de plis superposés, par application au contact, au moyen d'un rouleau d'application (32), de fibres continues sur un outillage de drapage (2), chaque pli étant réalisé par application d'une ou plusieurs bandes selon une orientation sur l'outillage de drapage ou sur des bandes du pli précédent, chaque bande étant formée d'une ou plusieurs fibres continues.

## Patentansprüche

1. Verfahren zur Herstellung eines Teils (1) aus Verbundwerkstoff, umfassend fortlaufende Fasern und eine Polymer-Matrix, wobei das Verfahren umfasst
- einen Schritt zur Herstellung einer Vorform (101), die aus fortlaufenden unidirektionalen Fasern gebildet wird, die entlang mindestens einer Faserausrichtung ausgerichtet sind,
- einen Schritt des Auftragens von Vliesfilamenten (40) auf mindestens einer ersten Hauptfläche (1001a) der Vorform, und
- einen Schritt des Vernadelns der Filamente anhand einer Vernadelungsvorrichtung (5), die eine Vielzahl von Nadeln (8, 108) umfasst, von denen jede mit mindestens einer Kerbe versehen ist, sodass Filamente durch die Nadeln angetrieben werden, und in einer im Wesentlichen senkrechten Richtung zu den fortlaufenden Fasern der Vorform angeordnet werden,
**dadurch gekennzeichnet, dass** beim Vernadelungsschritt jede Nadel mit einer einzigen Kerbe (82), die sich entlang einer Kerbenachse (B) senkrecht zur Hauptlängsachse (A) der Nadel erstreckt, oder mehreren Kerben (182a, 182b) versehen ist, die sich jeweils entlang einer Kerbenachse senkrecht zur Hauptlängsachse der Nadel erstrecken, wobei die Kerbenachsen zueinander parallel sind, die Nadeln und die Vorform derart angeordnet sind, dass die Kerbenachsen einen Winkel ungleich null mit der oder den Faserausrichtungen bilden.

2. Verfahren nach Anspruch 1, **dadurch gekennzeichnet, dass** die Vorform (101) aus mehreren überlagerten Falten (111-114) gebildet ist, wobei jede Falte aus fortlaufenden unidirektionalen Fasern gebildet ist, die entlang einer Faserausrichtung ausgerichtet sind, wobei die Vorform Falten umfasst, die mindestens zwei unterschiedliche Faserausrichtungen aufweisen, wobei die Nadeln und die Vorform derart angeordnet sind, dass die Kerbenachsen beim Vernadeln mit jeder der beiden Faserausrichtungen einen Winkel ungleich null bilden.

3. Verfahren nach Anspruch 2, **dadurch gekennzeichnet, dass** die Vorform (101) Falten mit unterschiedlichen Faserausrichtungen umfasst, wobei die Kerbenachsen (B) beim Vernadeln mit jeder Faserausrichtung einen Winkel ungleich null bilden.

4. Verfahren nach Anspruch 2 oder 3, **dadurch gekennzeichnet, dass** die Kerbenachsen (B) im Wesentlichen entlang einer Halbierungslinie (C1-C4) zweier benachbarter Faserausrichtungen, um mehr oder weniger als 10°, vorzugsweise mehr oder weniger als 5°, besser noch um mehr oder weniger als 2,5° angeordnet sind.

5. Verfahren nach einem der Ansprüche 1 bis 4, **dadurch gekennzeichnet, dass** die Faserausrichtungen zwischen +90° und -90° um eine Bezugsachse (X) herum definiert sind, wobei die Kerbenachsen entlang einer Ausrichtung ausgerichtet sind, die am weitesten von der Bezugsachse entfernt ist.

6. Verfahren nach einem der Ansprüche 1 bis 5, **dadurch gekennzeichnet, dass** die Kerbenachsen (B) einen Winkel von mindestens 15° mit jeder Faserausrichtung, vorzugsweise von mindestens 22,5° bilden.

7. Verfahren nach einem der Ansprüche 1 bis 6, **dadurch gekennzeichnet, dass** die Vernadelung anhand von Kranznadeln (8) hergestellt wird, die an ihrem distalen Ende mindestens eine Kerbe (82) aufweisen.

8. Verfahren nach einem der Ansprüche 1 bis 7, **dadurch gekennzeichnet, dass** die Vorform gebildet wird
- aus Falten mit Faserausrichtungen bei 0° und 90° in Bezug auf eine Bezugsachse (X), wobei die Kerbenachsen bei +45° und/oder -45°, vorzugsweise +45° oder -45° von der Bezugsachse angeordnet sind; oder
- aus Falten mit Faserausrichtungen bei +30° und -30° in Bezug auf eine Bezugsachse (X), wobei die Kerbenachsen bei 0° oder 90°, vorzugsweise bei 90° von der Bezugsachse angeordnet sind; oder
- aus Falten mit Faserausrichtungen bei 0°, 90°, +45° und -45° in Bezug auf eine Bezugsachse (X), wobei die Kerbenachsen bei +22,5°, -22,5°, +67,5° und/oder -67,5°, vorzugsweise bei +67,5° und/oder -67,5°, besser noch bei +67,5° oder -67,5° von der Bezugsachse angeordnet sind; oder
- aus Falten mit Faserausrichtungen bei 0°, +60° und -60° in Bezug auf eine Bezugsachse (X), wobei die Kerbenachsen bei 90°, +30°, oder -30°, vorzugsweise bei 90° von der Bezugsachse angeordnet sind, oder
- aus Falten mit Faserausrichtungen bei 0°, +30° und -30° in Bezug auf eine Bezugsachse (X), wobei die Kerbenachsen bei 90° von der Bezugsachse angeordnet sind.

9. Verfahren nach einem der Ansprüche 1 bis 8, **dadurch gekennzeichnet, dass** die Vorform beim Vernadeln ein Schmiermittel zum Verringern der Reibungen zwischen den Nadeln und den Fasern der Vorform umfasst.

10. Verfahren nach einem der Ansprüche 1 bis 9, **dadurch gekennzeichnet, dass** es die Herstellung einer trockenen Vorform umfasst, die mehrere überlagerte Falten umfasst, wobei die Falten aus fortlaufenden trockenen Fasern gebildet sind, die mit einem Bindemittel versehen sind, wobei das Bindemittel ein erstes Polymer umfasst, wobei das Verfahren nach dem Vernadelungsschritt einen Imprägnierungsschritt der trockenen Vorform mit einem Imprägnierungspolymer umfasst, das die Polymer-Matrix bildet.

11. Verfahren nach einem der Ansprüche 1 bis 10, **dadurch gekennzeichnet, dass** der Schritt des Auftragens von Filamenten (40) das Auftragen eines Vliesfilzes (4) umfasst, der aus den Filamenten gebildet ist.

12. Verfahren nach einem der Ansprüche 1 bis 11, **dadurch gekennzeichnet, dass** die Herstellung der Vorform die Herstellung von überlagerten Falten durch Kontaktauftragung, anhand einer Auftragungsrolle (32) von fortlaufenden Fasern auf einem Drapierwerkzeug (2) umfasst, wobei jede Falte durch Auftragen eines oder mehrerer Bänder entlang einer Ausrichtung auf dem Drapierwerkzeug oder auf Bändern der vorherigen Falte hergestellt wird, wobei jedes Band aus einer oder mehreren fortlaufenden Fasern gebildet ist.

## Claims

1. Method for producing a composite material part (1) comprising continuous fibers and a polymer matrix, said method comprising
- a step of producing a preform (101) formed of continuous unidirectional fibers oriented along at least one fiber direction,
- a step of applying non-woven filaments (40) to at least a first main face (101a) of the preform, and
- a step of needling said filaments by means of a needling device (5) comprising a plurality of needles (8, 108), each provided with at least one needle so that filaments are driven by the needles and arranged in a direction substantially perpendicular to the continuous fibers of the preform,
**characterized in that**, for the needling step, each needle is provided with a single notch (82) extending along a notch axis (B) perpendicular to the main longitudinal axis (A) of the needle, or several notches (182a, 182b) each extending along a notch axis perpendicular to the main longitudinal axis of the needle, said notch axes being parallel to each other, said needles and the preform being arranged so that the notch axes form a non-zero angle with the orientation(s) of the fiber.

2. Method according to claim 1, **characterized in that** the preform (101) is formed of several superimposed plies (111-114), each ply being formed of continuous unidirectional fibers oriented along one fiber orientation, said preform comprising plies having at least two different fiber orientations, said needles and the preform being arranged so that the notch axes form with each of the two fiber orientations a non-zero angle during needling.

3. Method according to claim 2, **characterized in that** said preform (101) comprises plies of different fiber orientations, the notch axes (B) form with each fiber orientation a non-zero angle during needling.

4. Method according to claim 2 or 3, **characterized in that** the notch axes (B) are arranged substantially along a bisector (C1-C4) of two adjacent fiber orientations, to within plus or minus 10°, preferably to within plus or minus 5°, more preferably to within plus or minus 2.5°.

5. Method according to one of claims 1 to 4, **characterized in that** the fiber orientations are defined between + 90° and -90° around a reference axis (X), the notch axes are oriented in an orientation furthest from the reference axis.

6. Method according to one of claims 1 to 5, **characterized in that** the notch axes (B) form an angle of at least 15° with each orientation of fiber, preferably at least 22.5°.

7. Method according to one of claims 1 to 6, **characterized in that** the needling is carried out by means of forked needles (8) each having at its distal end at least one notch (82).

8. Method according to one of claims 1 to 7, **characterized in that** the preform is formed
- of plies with fiber orientations at 0° and 90° relative to a reference axis (X), the notch axes are arranged at + 45° and/or -45°, preferably at + 45° or -45° relative to the reference axis; or
- plies with fiber orientations at + 30° and -30° relative to a reference axis (X), the notch axes are arranged at 0° or 90°, preferably at 90° relative to the reference axis; or
- plies with fiber orientations at 0°, 90°, + 45° and -45° relative to a reference axis (X), the notch axes are arranged at + 22.5°, -22.5°, + 67.5° and/or -67.5°, preferably at + 67.5° and/or -67.5°, more preferably at + 67.5° or -67.5 relative to the reference axis; or
- plies with fiber orientations at 0°, + 60° and -60° relative to a reference axis (X), the notch axes are arranged at 90°, + 30°, or -30°, preferably at 90° relative to the reference axis, or
- plies with fiber orientations at 0°, + 30° and -30° relative to a reference axis (X), the notch axes are arranged at 90° relative to the reference axis.

9. Method according to one of claims 1 to 8, **characterized in that** said preform comprises during needling a lubricating agent to reduce friction between the needles and the fibers of the preform.

10. Method according to one of claims 1 to 9, **characterized in that** it comprises the production of a dry preform comprising several superimposed plies, said plies being formed from continuous dry fibers provided with a binder, said binder comprising a first polymer, said method comprising, after the needling step, a step of impregnating the dry preform with an impregnating polymer forming the polymer matrix.

11. Method according to one of claims 1 to 10, **characterized in that** said step of applying filaments (40) comprises the application of a non-woven felt (4) formed from said filaments.

12. Method according to one of claims 1 to 11, **characterized in that** the production of the preform comprises the production of superimposed plies, by application by contact, by means of an application roller (32), of continuous fibers on a laying up tool (2), each ply being produced by applying one or several bands along an orientation on the laying up tool or on bands of the preceding ply, each band being formed of one or several continuous fibers.
